# EUROPÄISCHE PATENTSCHRIFT

(11) **EP 3 468 434 B1**
(45) Veröffentlichungstag und Bekanntmachung des Hinweises auf die Patenterteilung: **12.08.2020**
(21) Anmeldenummer: 17729073.1
(22) Anmeldetag: 02.06.2017
(51) Int. Cl.: A47J 43/07, A47J 43/046, A47J 43/08

(54) **ELEKTROMOTORISCH BETRIEBENE KÜCHENMASCHINE**
ELECTRIC-MOTOR-DRIVEN FOOD PROCESSOR
ROBOT DE CUISINE ÉLECTROMOTORISÉ

(30) Priorität: 13.06.2016 DE 102016110827
(43) Veröffentlichungstag der Anmeldung: 17.04.2019
(73) Patentinhaber: Vorwerk & Co. Interholding GmbH, 42275 Wuppertal (DE)
(72) Erfinder: HANNEMANN, Peter, 42281 Wuppertal (DE); STACH, Christiane, 42477 Radevormwald (DE)
(74) Vertreter: Müller, Enno
(86) Internationale Anmeldenummer: PCT/EP2017/063507
(87) Internationale Veröffentlichungsnummer: WO 2017/215961

(56) Entgegenhaltungen:
- EP-A1- 0 556 467
- EP-A1- 2 815 682
- FR-A1- 2 967 340
- US-A1- 2008 264 270

## Beschreibung

### Gebiet der Technik

Die Erfindung betrifft eine elektromotorisch betriebene Küchenmaschine mit einem einen Elektromotor aufweisenden Basisgerät und einem in das Basisgerät einsetzbaren Zubereitungsgefäß, wobei ein Gefäßboden des Zubereitungsgefäßes eine Bodenöffnung aufweist, die mittels eines Rührwerks fluiddicht verschließbar ist, welches Rührwerk durch die Bodenöffnung hindurch in eine mittels des Elektromotors rotierbare Kupplungseinrichtung eingreifbar ist, wobei die Kupplungseinrichtung ein drehfest mit der Kupplungseinrichtung verbundenes Dichtelement aufweist.

### Stand der Technik

Elektromotorisch betriebene Küchenmaschinen mit einem einen Elektromotor aufweisenden Basisgerät und einem in das Basisgerät einsetzbarem Zubereitungsgefäß sind im Stand der Technik hinreichend bekannt. Das Zubereitungsgefäß kann bspw. als ein Rührgefäß ausgebildet sein, in welches das Rührwerk durch den Gefäßboden hineinragt. Das Rührwerk kann bspw. als ein Messersatz mit einer Mehrzahl von Messern ausgebildet sein, um in dem Zubereitungsgefäß angeordnetes Zubereitungsgut zu zerkleinern und/oder zu rühren. Das Rührwerk kann des Weiteren alternativ oder zusätzlich auch einen Milchaufschäumer, bspw. zum Milchaufschäumen oder Sahneschlagen, tragen.

Das Rührwerk verschließt die Bodenöffnung des Zubereitungsgefäßes fluiddicht, so dass ein in dem Zubereitungsgefäß enthaltenes Zubereitungsgut nicht durch die Bodenöffnung in die Kupplungseinrichtung und/oder das Basisgerät strömen und dort Schäden hervorrufen kann. Wenn ein Nutzer der Küchenmaschine vor Befüllen des Zubereitungsgefäßes jedoch vergisst, das Rührwerk zu montieren, gelangt Zubereitungsgut durch die Bodenöffnung nach außen.

Die Dokumente EP 0556467 A1 und FR 2967340 A1 offenbaren Küchenmaschinen, bei welchen die Kupplungseinrichtung mittels eines Dichtelementes gegen einen benachbarten Gehäuseteilbereich abgedichtet ist.

### Zusammenfassung der Erfindung

Es ist von dem vorbeschriebenen Stand der Technik ausgehend Aufgabe der Erfindung, einen bei höheren Drehzahlen der Kupplungseinrichtung vermehrt auftretenden Verschleiß des Dichtelementes zu verhindern.

Zur Lösung der vorgenannten Aufgabe wird mit der Erfindung zunächst vorgeschlagen, dass das Dichtelement ausgebildet ist, in Abhängigkeit von einer Drehzahl der Kupplungseinrichtung von einem an dem Gehäuseteilbereich schleifenden Zustand in einen nicht schleifenden Zustand überführt zu werden, wobei das Dichtelement bei einer Drehzahl der Kupplungseinrichtung unterhalb einer definierten Grenzdrehzahl der Schwerkraft folgend fluiddicht gegen einen korrespondierenden unbeweglichen Gehäuseteilbereich des Basisgerätes wirkt und die Wirkverbindung aufgrund einer drehzahlabhängigen Fliehkrafteinwirkung bei einer Drehzahl oberhalb der Grenzdrehzahl freigibt.

Erfindungsgemäß ist die Küchenmaschine nun mit einem der Kupplungseinrichtung zugeordneten Dichtelement ausgestattet, welches in Abhängigkeit von einer Drehzahl der Kupplungseinrichtung von einem schleifenden, d.h. an dem Gehäuseteilbereich des Basisgerätes anliegenden, Zustand in einen nicht schleifenden, d.h. von dem Gehäuseteilbereich abgehobenen, Zustand überführt werden kann. Es liegt dabei die Idee zugrunde, dass ein ggf. versehentliches Befüllen des Zubereitungsgefäßes ohne vorherige Montage des Rührwerkes in der Bodenöffnung des Zubereitungsgefäßes bei Stillstand der Kupplungseinrichtung geschieht, d.h. solange das Rührwerk noch nicht in Betrieb ist. In diesem Fall wirkt das Dichtelement gegen den korrespondierenden Gehäuseteilbereich des Basisgerätes und dichtet dieses gegen aus dem Zubereitungsgefäß ausströmendes Zubereitungsgut ab. Der Nutzer hat dann die Möglichkeit, sein Versehen zu bemerken und das Zubereitungsgefäß nachträglich mit dem Rührwerk zu versehen, ohne dass Schaden an der elektromotorisch betriebenen Küchenmaschine entstanden ist.

Gegenüber einem dauerhaft gegen den korrespondierenden Gehäuseteilbereich wirkenden Dichtelement hat das erfindungsgemäß drehzahlabhängig wirkende Dichtelement den Vorteil, dass die Dichtwirkung bei Drehzahlen der Kupplungseinrichtung oberhalb der definierten Grenzdrehzahl, d.h. der Kontakt des Dichtelementes zu dem Gehäuseteilbereich des Basisgerätes, aufgehoben wird, so dass ein bei höheren Drehzahlen vermehrt auftretender Verschleiß des Dichtelementes verhindert wird. Gegenüber permanent nicht schleifenden Dichtungen hat die erfindungsgemäße Lösung den Vorteil, dass eine hohe Dichtwirkung unterhalb der definierten Grenzdrehzahl geschaffen wird.

Unterhalb der definierten Grenzdrehzahl liegt das Dichtelement an dem korrespondierenden Gehäuseteilbereich des Basisgerätes an. Dies kann in einem besonders einfachen Fall dadurch erreicht werden, dass das flexible Dichtelement bei einer üblichen Orientierung der Küchenmaschine während eines Gebrauchszustands, d.h. in einer senkrechten aufrechtstehenden Orientierung der Küchenmaschine, auf dem Gehäuseteilbereich aufliegt, so dass das Dichtelement der Schwerkraft folgend gegen den Gehäuseteilbereich drückt. Dazu weisen der Gehäuseteilbereich und das Dichtelement bezogen auf eine senkrechte Ebene zumindest einen Überlappungsbereich auf. Es ist jedoch nicht notwendig, dass das Dichtelement mit seiner gesamten Fläche auf dem Gehäuseteilbereich aufliegt.

Alternativ kann es auch vorgesehen sein, dass der Gehäuseteilbereich und das Dichtelement keine Überlappung in derselben senkrechten Ebene aufweisen, sondern bspw. bezogen auf eine horizontale Richtung nebeneinanderliegen, wobei das flexible Dichtelement bspw. mit einer Federkraft beaufschlagt gegen den Gehäuseteilbereich wirkt. Die Federkraft wirkt dabei vorteilhaft in eine horizontale Richtung. Zu diesem Zweck kann dem Dichtelement bspw. eine Blattfeder, Schraubenfeder o. dgl. zugeordnet sein, deren Rückstellkraft in Richtung des Gehäuseteilbereiches wirkt. Das Dichtelement selbst kann flexibel ausgebildet sein und durch Formveränderung gegen den Gehäuseteilbereich gedrückt werden und/oder bspw. nach der Art einer Klappe bewegbar sein. Insbesondere eignet sich auch die Ausbildung des Dichtelementes mit einem Filmscharnier.

Die definierte Grenzdrehzahl, ab deren Erreichung der schleifende Kontakt zwischen dem Dichtelement und dem korrespondierenden Gehäuseteilbereich aufgehoben werden soll, ist unter anderem abhängig von der Masse des Dichtelementes, der räumlichen Orientierung des Dichtelementes relativ zu dem Gehäuseteilbereich und ggf. der Kraft eines Federelementes, welche einer an dem Dichtelement angreifenden Fliehkraft entgegenwirkt. Damit die schleifende Verbindung zwischen dem Dichtelement und dem Gehäuseteilbereich aufgehoben werden kann, d.h. zur Entfernung des Dichtelementes von dem Gehäuseteilbereich, muss die aufgrund der Rotation der Kupplungseinrichtung an dem Dichtelement angreifende Fliehkraft ausreichen, um die an dem Dichtelement angreifende Schwerkraft und ggf. die Rückstellkraft des Federelementes zu überwinden. Sobald die Fliehkraft die entgegenstehenden Kräfte überwiegt, wird das Dichtelement von dem korrespondierenden Gehäuseteilbereich weg verlagert, bspw. durch die Änderung eines Stellwinkels, so dass zwischen dem Dichtelement und dem Gehäuseteilbereich ein Abstand entsteht.

Es wird vorgeschlagen, dass die definierte Grenzdrehzahl zwischen 50 U/min und 200 U/min liegt. Bis zu dieser Grenzdrehzahl liegt das Dichtelement noch an dem korrespondierenden Gehäuseteilbereich an und wirkt als schleifende Dichtung. Falls somit ein Nutzer der Küchenmaschine seinen Irrtum in Bezug auf die Nicht-Montage des Rührwerkes während des Stillstandes der Kupplungseinrichtung noch nicht bemerkt hat, dichtet das Dichtelement auch noch bei einer von dem Stillstand der Kupplungseinrichtung abweichenden Drehzahl bis hier bspw. vorteilhaft 200 U/min ab. Diese Drehzahl der Kupplungseinrichtung kann bspw. ausreichend sein, um ein Zubereitungsgut zu rühren. Bei einem Rührvorgang wird der Nutzer der Küchenmaschine üblicherweise spätestens seinen Irrtum bemerken, da die dabei normalerweise auftretenden Geräusche unterbleiben, wenn das Rührwerk nicht montiert wurde. Bis zu der definierten Grenzdrehzahl besteht dann noch eine dichtende Wirkung des Dichtelementes an dem Gehäuseteilbe-reich, so dass der Nutzer die Möglichkeit hat, nachträglich das Rührwerk in dem Zubereitungsgefäß anzuordnen, ohne dass bereits Schaden an der Küchenmaschine entstanden ist. Grundsätzlich kann die Grenzdrehzahl auch höher festgelegt sein, bspw. auf 500 U/min, 1000 U/min oder höher. Hier hat der Fachmann abzuwägen, inwiefern die weitergehende Dichtwirkung des Dichtelementes bei höheren Drehzahlen die Nachteile durch einen ggf. höheren Verschleiß des Dichtelementes bzw. des Gehäuseteilbereiches aufwiegt. Dies ist nicht zuletzt auch abhängig von den Materialien des Dichtelementes bzw. des Gehäuseteilbereiches.

Es wird vorgeschlagen, dass das Dichtelement eine flexible, die Kupplungseinrichtung in Umfangsrichtung umgebende Dichtlippe ist. Das Dichtelement kann bspw. ringförmig um die Kupplungseinrichtung angeordnet sein, so dass dieses die Kupplungseinrichtung in alle möglichen radialen Richtungen gleichmäßig gegenüber dem Gehäuseteilbereich abdichtet. Die flexible Ausbildung des Dichtelementes ist insbesondere vorteilhaft, da das Dichtelement dabei selbst eine Beweglichkeit bereitstellt und keine weiteren Scharniere o. dgl. zur Verlagerung eines Teilbereiches des Dichtelementes notwendig sind. Durch die Fliehkrafteinwirkung bei drehender Kupplungseinrichtung wird das flexible Dichtelement verformt, insbesondere ein freier radialer Endbereich des Dichtelementes entgegen der Schwerkraft von dem Gehäuseteilbereich abgehoben, so dass die schleifende Verbindung aufgehoben wird. Das Dichtelement kann dabei aus flexiblen Materialien, wie bspw. Kautschuk, Gummi, Silikon, Polyethylen, Polypropylen oder ähnlich flexiblen Materialien ausgebildet sein.

Vorzugsweise ist das Dichtelement an die Kupplungseinrichtung geklebt und/oder geklemmt. Es kann jedoch auch eine einteilige Ausbildung von Kupplungseinrichtung und Dichtelement vorgesehen sein, bspw. in der Form eines 2-Komponenten-Spritzgussteils.

Es wird vorgeschlagen, dass das Dichtelement ein Material mit einer Hitzebeständigkeit bei Temperaturen größer als 100°C, insbesondere eine Hitzebeständigkeit bei Temperaturen größer als 150°C aufweist. Vorzugsweise weist das Dichtelement PTFE, Silikon-Kautschuk, Äthylen-Propylen-Terpolymer (APTK), Viton, Butyl, Teflon auf. Durch die schleifende Verbindung des Dichtelementes zu dem korrespondierenden Gehäuseteil-bereich des Basisgerätes unterhalb der definierten Grenzdrehzahl, kommt es zu einer Erhitzung des Dichtelementes aufgrund der Reibung. Um dabei Schäden an dem Dichtelement zu vermeiden, bspw. einen übermäßigen Abrieb, eine Verformung oder anderes, sollte vorzugsweise ein hitzebeständiges Material eingesetzt werden, welches die entstehenden Temperaturen von 100°C, insbesondere 150°C, oder höher ohne Schädigung aushalten kann. Hierzu eignen sich insbesondere die vorgenannten Materialien.

Des Weiteren wird vorgeschlagen, dass das Dichtelement eine Materialstärke von 0,5 mm bis 2 mm aufweist. In Abhängigkeit von der Art des Materials des Dichtelementes sollte das Dichtelement einerseits durch seine Materialstärke ein solches Gewicht aufweisen, dass ein fluiddichter Abschluss zu dem Gehäuseteilbereich geschaffen wird, und zum anderen noch so leicht und flexibel sein, dass das Dichtelement aufgrund der angreifenden Fliehkraft von dem Gehäuseteilbereich abgehoben bzw. zu diesem beabstandet werden kann. Bei den zuvor genannten bevorzugten Materialien hat sich in der Praxis eine Materialstärke von 0,5 mm bis 2 mm als vorteilhaft herausgestellt.

Des Weiteren wird vorgeschlagen, dass der zu dem Dichtelement korrespondierende Gehäuseteilbereich des Basisgerätes eine konvexe Lauffläche für das Dichtelement aufweist. Durch die konvexe Oberflächenkrümmung der Lauffläche wird eine höhere Dichtwirkung zwischen dem Dichtelement und dem Gehäuseteilbereich erzielt. Die Lauffläche kann dabei entweder insgesamt konvex ausgebildet sein oder nur einen streifen- bzw. ringförmigen konvexen Teilbereich aufweisen. Alternativ könnte auch die an dem Gehäuseteilbereich zur Verfügung gestellte Lauffläche eben ausgebildet sein und das Dichtelement einen konvex ausgebildeten Kontaktbereich aufweisen.

Es wird des Weiteren vorgeschlagen, dass ein radialer Abstand zwischen der Kupplungseinrichtung und dem korrespondierenden Gehäuseteilbereich des Basisgerätes in einer Kontaktebene des Gehäuseteilbereiches und des Dichtelementes senkrecht zu einer Rotationsachse der Kupplungseinrichtung zwischen 2 mm und 10 mm beträgt, und/oder dass eine radiale Länge des Dichtelementes bezogen auf eine senkrechte Projektion des den Gehäuseteilbereich kontaktierenden Dichtelementes zwischen 4 mm und 12 mm beträgt. Grundsätzlich sollte der zwischen der Kupplungseinrichtung und dem Gehäuseteilbereich bestehende Freiraum möglichst gering sein, hier vorzugsweise zwischen 2 mm und 10 mm, so dass ein möglichst kleiner radialer Abstand mittels des Dichtelementes zu überbrücken ist und das Dichtelement dem entsprechend kurz ausgebildet sein kann. Dies reduziert bzw. beseitigt die Gefahr, dass bei einem Austritt von Zubereitungsgut aus dem Zubereitungsgefäß ggf. auf dem Dichtelement liegendes Zubereitungsgut das Dichtelement derart verformt, dass zwischen dem Dichtelement und dem korrespondierenden Gehäuseteilbereich des Basisgerätes ein Spalt entsteht, durch den Zubereitungsgut in das Basisgerät eintreten kann. Das Dichtelement sollte zumindest so lang sein, dass dieses den zwischen Kupplungseinrichtung und Gehäuseteilbereich bestehenden Spalt vollständig abdecken kann. Insbesondere empfiehlt sich eine bezogen auf die Kontaktebene zwischen dem Gehäuseteilbereich und dem Dichtelement um ca. 5 Prozent bis 30 Prozent größere Länge als der Abstand zwischen einem Kontaktpunkt des Dichtelementes auf dem korrespondierenden Gehäuseteilbereich und dem in der Kontaktebene liegenden Teilbereich der Kupplungseinrichtung. Das Dichtelement selbst muss dabei nicht über seine gesamte Länge eben ausgebildet sein, sondern kann vielmehr bezogen auf einen Längsschnitt durch das Zubereitungsgefäß bzw. das Rührwerk auch gebogen ausgebildet sein.

Des Weiteren kann das Dichtelement auch so an der Kupplungseinrichtung angeordnet sein, dass dieses bei einer Drehzahl der Kupplungseinrichtung unterhalb der Grenzdrehzahl nicht waagerecht orientiert ist, d.h. senkrecht zu der Rotationsachse des Rührwerks, sondern vielmehr bezogen auf eine Richtung von der Kupplungseinrichtung zu dem Gehäuseteilbereich geneigt ist, d.h. nach unten weist. Sofern das Dichtelement in dieser Stellung bezogen auf die Kontaktebene über die Kontaktfläche an dem Gehäuseteilbereich hinausragt, vorzugsweise sogar um diesen Teilbereich herum gekrümmt ist, kann eine Dichtwirkung sowohl in axialer als auch in radialer Richtung bezogen auf die Rotationsachse erreicht werden. Bei Überschreiten der definierten Grenzdrehzahl wird das Dichtelement von dem korrespondierenden Gehäuseteilbereich abgehoben, so dass die senkrechte Projektion des Dichtelementes umso mehr den Abstand zwischen der Kupplungseinrichtung und dem korrespondierenden Gehäuseteilbereich in der Kontaktebene überragt. Hierdurch wird zusätzlich ein etwaiges Abtropfen von Zubereitungsgut von dem Dichtelement in das Basisgerät zwischen Kupplungseinrichtung und Gehäuseteilbereich verhindert.

Gemäß einer alternativen Ausführung wird ebenfalls eine elektromotorisch betriebene Küchenmaschine mit einem einen Elektromotor aufweisenden Basisgerät und einem in das Basisgerät einsetzbaren Zubereitungsgefäß vorgeschlagen, wobei ein Gefäßboden des Zubereitungsgefäßes eine Bodenöffnung aufweist, die mittels eines Rührwerks fluiddicht verschließbar ist, welches Rührwerk durch die Bodenöffnung hindurch in eine mittels des Elektromotors rotierbare Kupplungseinrichtung eingreifbar ist, und wobei ein der Kupplungseinrichtung benachbarter unbeweglicher Gehäuseteilbereich des Basisgerätes ein flexibles Dichtelement, nämlich einen Schaumkörper, aufweist, welcher auf der gegen die Kupplungseinrichtung wirkenden Seite eine fluiddichte Oberflächenlage, nämlich eine Teflonlage, aufweist.

Gemäß dieser Ausführung wird eine Küchenmaschine mit einem Dichtelement geschaffen, welches unabhängig von einer Drehzahl der Kupplungseinrichtung gegenüber einem Gehäuseteilbereich des Basisgerätes abdichtet. Das Dichtelement ist flexibel ausgebildet, vorzugsweise als Schaumkörper, und wirkt federelastisch gegen den Gehäuseteilbereich. Um auch bei höheren Drehzahlen der Kupplungseinrichtung eine optimale Dichtwirkung zu erreichen, ist das Dichtelement mit einer fluiddichten Oberflächenlage beschichtet, vorzugsweise aus einem abriebfesten, hitzebeständigen Material wie Teflon. Das Dichtelement ist dabei dem unbeweglichen Gehäuseteilbereich des Basisgerätes zugeordnet, während die das Dichtelement kontaktierende Kupplungseinrichtung rotiert. Die Kupplungseinrichtung ist vorzugsweise zumindest in einem Teilbereich als ein Metallring ausgebildet, welcher auf dem Dichtelement liegt. Das flexible Dichtelement weist vorzugsweise eine Federelastizität auf, bspw. als ein Schaumkörper oder Gummikörper, so dass das Dichtelement an die Kupplungseinrichtung gedrückt wird. Die Federelastizität erlaubt darüber hinaus einen axialen Spielausgleich und eine axiale Beweglichkeit gegenüber der Kupplungseinrichtung. Darüber hinaus ergibt sich durch das freie Auflegen der Kupplungseinrichtung auf dem Dichtelement ein radialer Toleranzausgleich. Die fluiddichte Oberflächenlage, bspw. in Form der vorgeschlagenen Teflonfolie, kann bspw. auf das Dichtelement aufgeklebt sein.

Schließlich wird vorgeschlagen, dass die Kupplungseinrichtung auf der gegen das Dichtelement wirkenden Seite eine konvexe Lauffläche für das Dichtelement, insbesondere einen in axiale Richtung weisenden Vorsprung, aufweist, und/oder, dass das Dichtelement auf der gegen die Kupplungseinrichtung wirkenden Seite eine konvexe Lauffläche für die Kupplungseinrichtung, insbesondere einen in axiale Richtung weisenden Vorsprung, aufweist. Hierdurch ergibt sich eine optimale Dichtwirkung zwischen der Kupplungseinrichtung und dem Dichtelement. Die konvexe Lauffläche des Dichtelementes bzw. der Kupplungseinrichtung kann entweder auf der gesamten Kontaktfläche zwischen der Kupplungseinrichtung und dem Dichtelement ausgebildet sein, oder nur partiell, bspw. als in axiale Richtung weisender Vorsprung. Dieser Vorsprung kann bspw. nach der Art eines Rings entlang einer ebenfalls ringförmigen Fläche des Dichtelementes bzw. der Kupplungseinrichtung ausgebildet sein.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine in einer perspektivischen Ansicht,
- Fig. 2: die Küchenmaschine gemäß Figur 1 in einer Draufsicht,
- Fig. 3: einen Längsschnitt der Küchenmaschine inklusive eines vergrößerten Teilausschnitts im Bereich einer Kupplungseinrichtung für ein Rührwerk,
- Fig. 4: einen vergrößerten Teilbereich der Küchenmaschine zwischen der Kupplungseinrichtung und einem korrespondierenden Gehäuseteilbereich eines Basisgerätes mit einem Dichtelement in einer Kontaktstellung,
- Fig. 5: den Teilbereich gemäß Figur 4 mit dem Dichtelement in einer Nicht-Kontaktstellung,
- Fig. 6: eine zweite Ausführungsvariante eines Teilbereiches mit einem Dichtelement in einer Kontaktstellung,
- Fig. 7: den Teilbereich gemäß Figur 6 mit dem Dichtelement in Nicht-Kontaktstellung,
- Fig. 8: einen Teilbereich der Küchenmaschine im Bereich eines Rührwerkes mit einem Dichtelement und einer Kupplungseinrichtung gemäß einer weiteren Ausführungsvariante.

### Beschreibung der Ausführungsformen

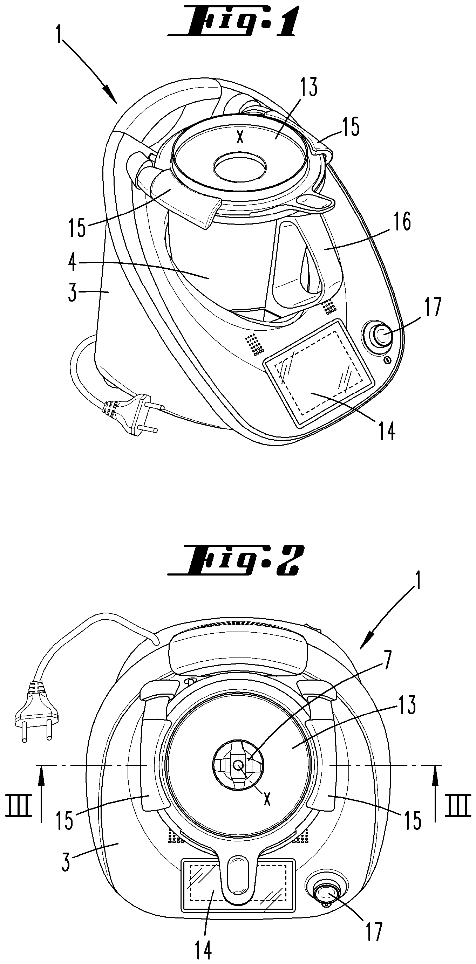

Figur 1 zeigt eine elektromotorisch betriebene Küchenmaschine 1, welche hier als kombiniertes Koch-Mix-Gerät ausgebildet ist. Die Küchenmaschine 1 weist ein Basisgerät 3 auf, in welches ein Zubereitungsgefäß 4 eingesetzt ist. In dem Zubereitungsgefäß 4 ist ein Rührwerk 7 (in Figur 1 nicht dargestellt) angeordnet, mit welchem in dem Zubereitungsgefäß 4 vorhandenes Zubereitungsgut zerkleinert, gerührt oder auf andere Art und Weise zubereitet werden kann. Das Rührwerk 7 ist mittels eines in dem Basisgerät 3 der Küchenmaschine 1 angeordneten Elektromotors 2 (in Figur 1 nicht dargestellt) antreibbar. Das Rührwerk 7 rotiert um eine Rotationsachse x. Hierzu greift das Rührwerk 7 in eine rotierbare mit dem Elektromotor 2 in Verbindung stehende Kupplungseinrichtung 8 (in Figur 1 nicht dargestellt) ein.

Dem Zubereitungsgefäß 4 ist des Weiteren ein Deckelelement 13 zugeordnet, welches mit Hilfe von Verschlusswalzen 15 fluiddicht mit dem Zubereitungsgefäß 4 verbindbar ist. Das Zubereitungsgefäß 4 weist des Weiteren einen Griff 16 zum Ergreifen des Zubereitungsgefäßes 4 durch einen Nutzer auf. Des Weiteren verfügt das Basisgerät 3 über ein Display 14 zur Anzeige von Statusparametern der Küchenmaschine 1, Rezeptvorschlägen, aktuellen Parametern des in dem Zubereitungsgefäß 4 befindlichen Zubereitungsgutes und dgl. Ein Schalter 17, hier bspw. als Druck-Dreh-Knopf ausgebildet, dient zum An- und Ausschalten der Küchenmaschine 1 und/oder zur Auswahl und Bestätigung eines auf dem Display 14 angezeigten Befehls oder Parameters.

Figur 2 zeigt die Küchenmaschine 1 in einer Draufsicht. In dieser Darstellung ist das Rührwerk 7 erkennbar, welches als Messersatz ausgebildet ist und um die Rotationsachse x der Kupplungseinrichtung 8 rotiert.

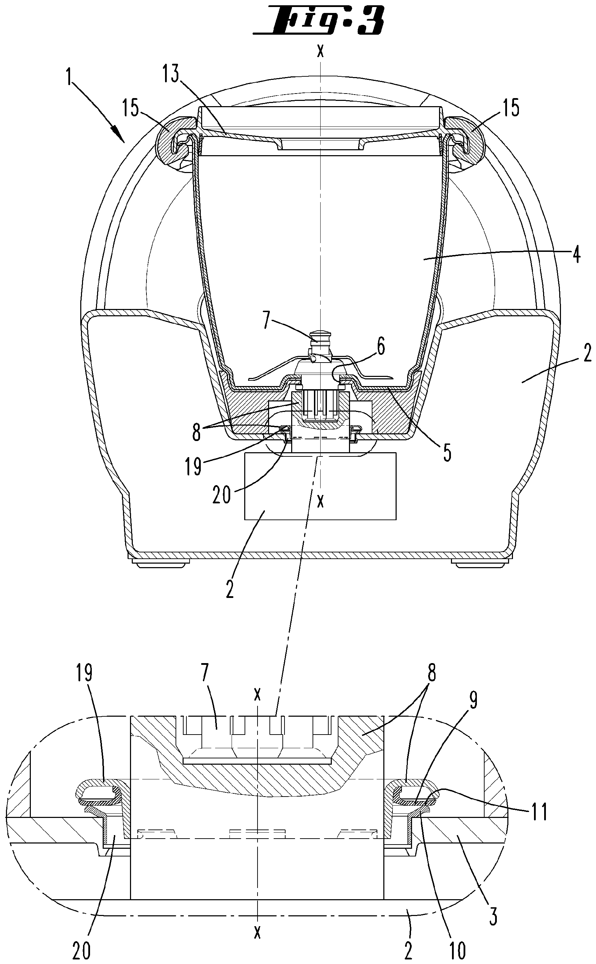

Figur 3 zeigt die Küchenmaschine 1 in einem Längsschnitt. Das Zubereitungsgefäß 4 weist einen Gefäßboden 5 mit einer Bodenöffnung 6 auf, durch welche ein Teilbereich des Rührwerks 7 hindurchgeführt und in die Kupplungseinrichtung 8 des Basisgerätes 3 hineingesteckt ist. Das Rührwerk 7 bildet ein Verschlusselement für die Bodenöffnung 6, so dass die Bodenöffnung 6 fluiddicht verschlossen ist. Die Kupplungseinrichtung 8 und damit auch das Rührwerk 7 rotiert um die Rotationsachse x. Die Kupplungseinrichtung 8 wird mittels des Elektromotors 2 angetrieben, so dass die Kupplungseinrichtung 8 um die Rotationsachse x rotiert und dabei das eingesteckte Rührwerk 7 mitnimmt. In dem in der Figur vergrößert dargestellten Teilbereich des Basisgerätes 3 der Küchenmaschine 1 ist ein Freiraum 20 zwischen der rotierenden Kupplungseinrichtung 8 und dem feststehenden Gehäuseteilbereich 10 des Basisgerätes 3 erkennbar. Die Kupplungseinrichtung 8 weist einen bezogen auf die Rotationsachse x radial nach außen weisenden Kragen 19 auf, unter welchem ein Dichtelement 9 angeordnet ist.

Der Kragen 19 der Kupplungseinrichtung 8 ist vorteilhaft einteilig mit den weiteren Teilbereichen der Kupplungseinrichtung 8 ausgebildet, kann jedoch auch an diese angeklebt oder anderweitig mit diesen verbunden sein. Der Kragen 19 weist bezogen auf den dargestellten Längsschnitt eine umgekehrte L- oder U-Form auf, so dass versehentlich aus dem Zubereitungsgefäß 4 in den Bereich des Kragens 19 gelangendes Zubereitungsgut bereits von dem Kragen 19 abtropft und nicht weiter in das Basisgerät 3 der Küchenmaschine 1 vordringen kann. An der Kupplungseinrichtung 8, nämlich hier unter dem Kragen 19, das ein Dichtelement 9 angeordnet, welches als flexible Dichtlippe ausgebildet ist. Die Dichtlippe ist hier aus einem flexiblen, hitzebeständigen Kunststoff, nämlich Silikon-Kautschuk, ausgebildet. In dem in Figur 3 dargestellten nicht rotierenden Zustand der Kupplungseinrichtung 8 liegt das Dichtelement 9 auf einer Lauffläche 11 eines korrespondierenden Gehäuseteilbereiches 10 des Basisgerätes 3 auf. Zwischen dem korrespondierenden Gehäuseteilbereich 10 und der Kupplungseinrichtung 8 existiert der ringförmig um die Kupplungseinrichtung 8 ausgebildeten Freiraum 20. Der Freiraum 20 sorgt dafür, dass die rotierende Kupplungseinrichtung 8 nicht an dem Gehäuseteilbereich 10 entlangschleift und dort zu einer Beschädigung oder einem Abrieb der Kupplungseinrichtung 8 bzw. des Gehäuseteilbereiches 10 führt. Zum Verschluss dieses Freiraums 20, d.h. zur Verhinderung eines Eindringens von Zubereitungsgut in den Freiraum 20, liegt das Dichtelement 9 bei Nicht-Rotation der Kupplungseinrichtung 8 fluiddicht auf der Lauffläche 11 des Gehäuseteilbereiches 10 auf.

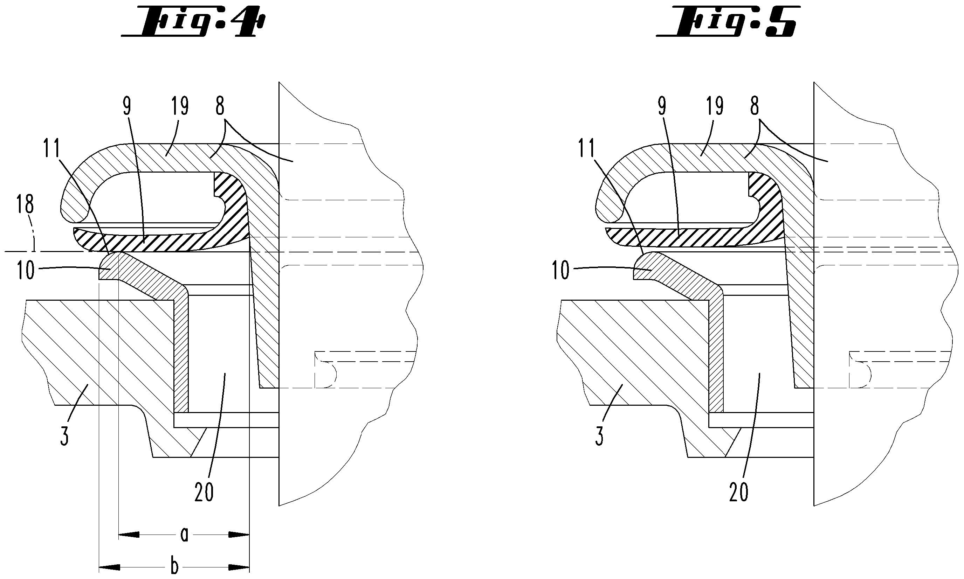

Die Figuren 4 und 5 zeigen das zwischen der Kupplungseinrichtung 8 und dem Gehäuseteilbereich 10 angeordnete Dichtelement 9 in einer auf die Lauffläche 11 des Gehäuseteilbereiches 10 aufgelegten Stellung des Dichtelementes 9 (Figur 4) sowie in einer von der Lauffläche 11 abgehobenen Stellung (Figur 5).

Bei der Darstellung gemäß Figur 4 ist die Kupplungseinrichtung 8 nicht angetrieben, d.h. rotiert nicht. In diesem Fall liegt das Dichtelement 9 der Schwerkraft folgend auf der Lauffläche 11 des Gehäuseteilbereiches 10 auf und dichtet fluiddicht gegenüber dem Gehäuseteilbereich 10 ab, so dass kein Zubereitungsgut in den Freiraum 20 und damit in das Basisgerät 3 gelangen kann. Das Dichtelement 9 ist dabei bezogen auf eine radiale Richtung (bezogen auf die Rotationsachse x) länger ausgebildet als ein Abstand a zwischen der Lauffläche 11 und der Kupplungseinrichtung 8 in derselben Ebene, so dass das Dichtelement 9 vorteilhaft einen Überstand über die Lauffläche 11 hinaus aufweist und optimal gegenüber der Lauffläche 11 abdichtet, insbesondere auch, wenn Zubereitungsgut oben auf dem Dichtelement 9 liegen sollte. Im Einzelnen ist der Abstand a in einer Kontaktebene 18, welche senkrecht zu der Rotationsachse x ausgebildet ist, zwischen dem Kontaktpunkt der Lauffläche 11 mit dem Dichtelement 9 und dem Schnittpunkt der Kontaktebene 18 mit der Kupplungseinrichtung 8 kleiner als die senkrecht in die Kontaktebene 18 projizierte Länge b des Dichtelementes 9. Wie in der Figur dargestellt, ist es dabei nicht erforderlich, dass das Dichtelement 9 vollständig eben ausgebildet ist. Vielmehr kann dieses auch eine Krümmung zur optimalen Abdichtung mit der Lauffläche 11 aufweisen. Wichtig ist dabei insbesondere, dass das Dichtelement 9 optimal gegen die Lauffläche 11 abdichtet, was insbesondere auch durch eine Krümmung des Dichtelementes 9 unterstützt werden kann.

Figur 5 zeigt die Stellung des Dichtelements 9 während einer Rotation der Kupplungseinrichtung 8. Durch die bei der Rotation der Kupplungseinrichtung 8 an dem Dichtelement 9 angreifende Zentrifugalkraft wird das Dichtelement 9 nach radial außen (bezogen auf die Rotationsachse x) gestreckt und hebt dadurch von der Laufläche 11 des Gehäuseteilbereiches 10 ab. Dadurch wird das Dichtelement 9 von der zuvor gemäß Figur 4 schleifenden Dichtwirkung in eine nicht schleifende Dichtwirkung (gemäß Figur 5) überführt. Der Zeitpunkt des Abhebens des Dichtelementes 9 von der Lauffläche 11 wird u.a. durch die Drehzahl der rotierenden Kupplungseinrichtung 8, die Masse des Dichtelementes 9 sowie die räumliche Anordnung und Gestalt des Dichtelementes 9 zu der räumlichen Anordnung und Gestalt der korrespondierenden Lauffläche 11 des Gehäuseteilbereiches 10 bestimmt. Durch die vorgenannten Parameter ist eine Grenzdrehzahl bestimmt, ab welcher das Dichtelement 9 von der Lauffläche 11 abhebt. Bei einer Rotation der Kupplungseinrichtung 8 bzw. des Dichtelementes 9 mit der Grenzdrehzahl heben sich die an dem Dichtelement 9 angreifende Zentrifugalkraft und die an dem Dichtelement 9 angreifende Schwerkraft gegeneinander auf. Bei einer Drehzahl über der Grenzdrehzahl ist die angreifende Zentrifugalkraft größer als die angreifende Schwerkraft, so dass es zu einer Streckung und einem Abheben des Dichtelementes 9 von der korrespondierenden Lauffläche 11 kommt. Sobald die Drehzahl wieder unter die Grenzdrehzahl sinkt, überwiegt die an dem Dichtelement 9 angreifende Schwerkraft die Zentrifugalkraft, so dass das Dichtelement 9 der Schwerkraft folgend absinkt und die Lauffläche 11 des Gehäuseteilbereiches 10 fluiddicht kontaktiert. Die Öffnung des Freiraums 20 ist somit wieder fluiddicht abgeschlossen. Die Grenzdrehzahl liegt hier bspw. bei 100 U/min, so dass nicht nur bei Stillstand der Kupplungseinrichtung 8 eine schleifende Dichtfunktion des Dichtelementes 9 gegeben ist, sondern auch noch bei einer Rotation der Kupplungseinrichtung 8 unterhalb von 100 U/min, was bspw. einer üblichen Drehzahl für eine Rührfunktion des Rührwerkes 7 entspricht. Bei dieser Drehzahl schleift das Dichtelement 9 auf der Lauffläche 11 des Gehäuseteilbereiches 10 und dichtet den Freiraum 20 ab.

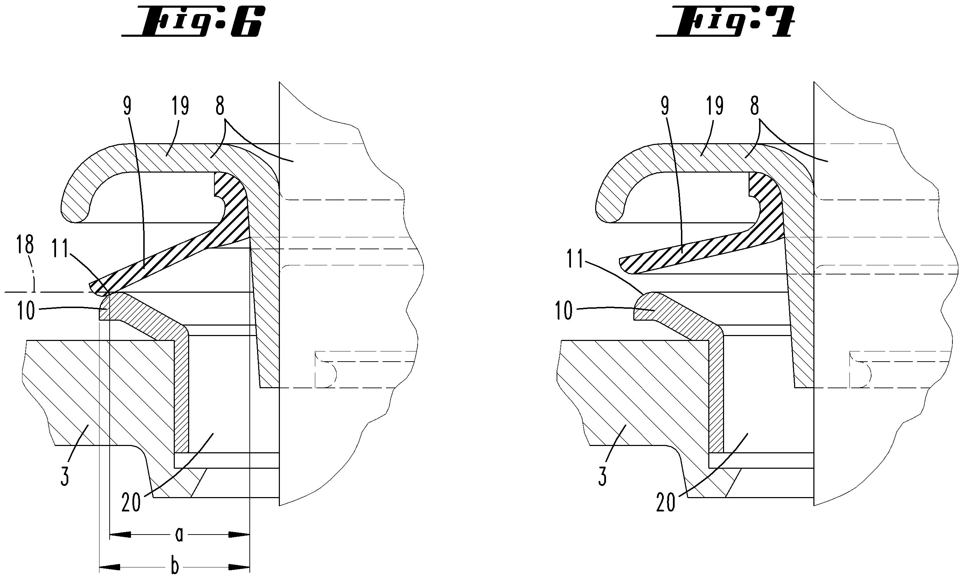

Die Figuren 6 und 7 zeigen ein weiteres Ausführungsbeispiel mit einem Dichtelement 9 während einer fluiddichten Anlage an der Lauffläche 11 (Figur 6) und einer von der Lauffläche 11 abgehobenen Stellung (Figur 7). Bei dieser Ausgestaltung ist das Dichtelement 9 während der auf die Lauffläche 11 aufgelegten Stellung nicht im Wesentlichen horizontal angeordnet, sondern vielmehr schräg, hier bspw. in einem Winkel von ca. 45° zu der Kontaktebene 18 bzw. auch der Rotationsachse x. Dadurch dichtet der freie Endbereich des Dichtelementes 9 gegen die Lauffläche 11 nicht nur in eine axiale Richtung, sondern vielmehr auch in eine radiale Richtung ab, was die Dichtwirkung zusätzlich erhöht. Das Dichtelement 9 ist gegenüber der Figur 4 bereits in der Ruhestellung im Wesentlichen gestreckt. Auch gemäß der Ausführung der Figuren 6 und 7 ist der Zeitpunkt des Abhebens des Dichtelementes 9 von der Lauffläche 11 von dem Kräftegleichgewicht zwischen der an dem Dichtelement 9 angreifenden Zentrifugalkraft und der an dem Dichtelement 9 angreifenden Schwerkraft abhängig. Ab einer von der Masse des Dichtelementes 9 abhängigen Grenzdrehzahl hebt das Dichtelement 9 von der Lauffläche 11 ab, so dass das Dichtelement 9 von einem an der Lauffläche 11 schleifenden Zustand in einen abgehobenen Zustand übergeht.

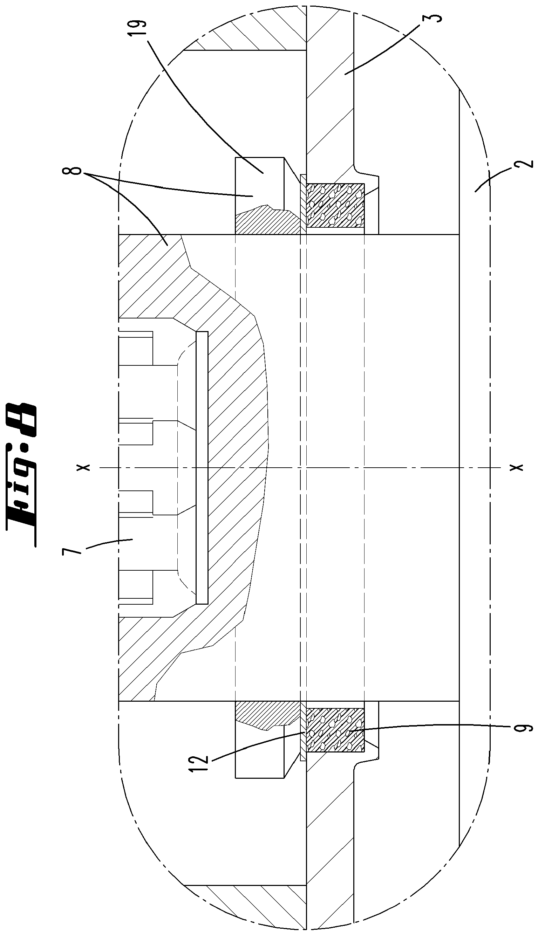

Figur 8 zeigt eine alternative Ausführungsform der Erfindung, bei welcher das Dichtelement 9 unabhängig von der Drehzahl der Kupplungseinrichtung 8 stets schleifend abdichtet. Das Dichtelement 9 ist hier ein an dem Basisgerät 3 angeordneter Schaumkörper, welcher eine Flexibilität und Elastizität aufweist. Das Dichtelement 9 ist als ringförmiger Körper ausgebildet. Auf dem Dichtelement 9 ruht ein korrespondierender, ebenfalls ringförmig ausgebildeter Kragen 19 der Kupplungseinrichtung 8. Auf der der Kupplungseinrichtung 8 zugewandten Seite weist das Dichtelement 9 eine Oberflächenlage 12, hier eine Teflonfolie, auf, welche auf das Dichtelement 9 aufgeklebt ist. Der Kragen 19 der Kupplungseinrichtung 8 hat drehzahlunabhängig stets schleifenden Kontakt zu der Oberflächenlage 12 des Dichtelementes 9. Aufgrund der Flexibilität und Federeigenschaft des Dichtelementes 9 drückt das Dichtelement 9 die Oberflächenlage 12 gegen die Kupplungseinrichtung 8, so dass ein axialer Toleranzausgleich geschaffen ist und eine optimale Dichtwirkung besteht. Die Oberflächenlage 12 weist darüber hinaus in radialer Richtung bezogen auf die Rotationsachse x einen radialen Überlapp zu dem Kragen 19 der Kupplungseinrichtung 8 auf, so dass ein radiales Spiel der Kupplungseinrichtung 8 zu dem Dichtelement 9 ausgeglichen werden kann. Durch die Hitzebeständigkeit der Oberflächenlage 12 ist die Dichtwirkung des Dichtelementes 9 auch bei hohen Drehzahlen der Kupplungseinrichtung 8 gewährleistet, bspw. bei Drehzahlen von mehr als 10000 U/min.

Obwohl dies in Figur 8 nicht dargestellt ist, kann die gegen das Dichtelement 9 wirkende Seite der Kupplungseinrichtung 8 eine konvexe Lauffläche aufweisen, oder kann alternativ die gegen die Kupplungseinrichtung 8 wirkende Seite des Dichtelementes 9 eine konvexe Lauffläche aufweisen, welche die Dichtwirkung zwischen dem Dichtelement 9 und dem Kragen 19 der Kupplungseinrichtung 8 zusätzlich erhöht. Die Lauffläche muss dabei nicht über ihre gesamte radiale Breite konvex ausgebildet sein, vielmehr kann auch nur bspw. ein ringförmiger Streifen der Lauffläche konvex ausgebildet sein, bspw. als in Richtung der korrespondierenden Gegenfläche ragender Vorsprung.

**Liste der Bezugszeichen**

| | | | |
|---|---|---|---|
| 1 | Küchenmaschine | a | Abstand |
| 2 | Elektromotor | b | Länge |
| 3 | Basisgerät | x | Rotationsachse |
| 4 | Zubereitungsgefäß | | |
| 5 | Gefäßboden | | |
| 6 | Bodenöffnung | | |
| 7 | Rührwerk | | |
| 8 | Kupplungseinrichtung | | |
| 9 | Dichtelement | | |
| 10 | Gehäuseteilbereich | | |
| 11 | Lauffläche | | |
| 12 | Oberflächenlage | | |
| 13 | Deckelelement | | |
| 14 | Display | | |
| 15 | Verschlusswalze | | |
| 16 | Griff | | |
| 17 | Schalter | | |
| 18 | Kontaktebene | | |
| 19 | Kragen | | |
| 20 | Freiraum | | |

## Patentansprüche

1. Elektromotorisch betriebene Küchenmaschine (1) mit einem einen Elektromotor (2) aufweisenden Basisgerät (3) und einem in das Basisgerät (3) einsetzbaren Zubereitungsgefäß (4), wobei ein Gefäßboden (5) des Zubereitungsgefäßes (4) eine Bodenöffnung (6) aufweist, die mittels eines Rührwerks (7) fluiddicht verschließbar ist, welches Rührwerk (7) durch die Bodenöffnung (6) hindurch in eine mittels des Elektromotors (2) rotierbare Kupplungseinrichtung (8) eingreifbar ist, wobei die Kupplungseinrichtung (8) ein drehfest mit der Kupplungseinrichtung (8) verbundenes Dichtelement (9) aufweist, **dadurch gekennzeichnet, dass** das Dichtelement (9) ausgebildet ist, in Abhängigkeit von einer Drehzahl der Kupplungseinrichtung (8) von einem an dem Gehäuseteilbereich (10) schleifenden Zustand in einen nicht schleifenden Zustand überführt zu werden, wobei das Dichtelement (9) bei einer Drehzahl der Kupplungseinrichtung (8) unterhalb einer definierten Grenzdrehzahl, der Schwerkraft folgend fluiddicht gegen einen korrespondierenden unbeweglichen Gehäuseteilbereich (10) des Basisgerätes (3) wirkt und die Wirkverbindung aufgrund einer drehzahlabhängigen Fliehkrafteinwirkung bei einer Drehzahl oberhalb der Grenzdrehzahl freigibt.

2. Elektromotorisch betriebene Küchenmaschine (1) nach Anspruch 1, **dadurch gekennzeichnet, dass** die Grenzdrehzahl zwischen 50 U/min und 200 U/min liegt.

3. Elektromotorisch betriebene Küchenmaschine (1) nach Anspruch 1 oder 2, **dadurch gekennzeichnet, dass** das Dichtelement (9) eine flexible, die Kupplungseinrichtung (8) in Umfangsrichtung umgebende Dichtlippe ist.

4. Elektromotorisch betriebene Küchenmaschine (1) nach einem der vorhergehenden Ansprüche, **dadurch gekennzeichnet, dass** das Dichtelement (9) an die Kupplungseinrichtung (8) geklebt und/oder geklemmt ist.

5. Elektromotorisch betriebene Küchenmaschine (1) nach einem der vorhergehenden Ansprüche, **dadurch gekennzeichnet, dass** das Dichtelement (9) ein Material mit einer Hitzebeständigkeit bei Temperaturen größer als 100°C, insbesondere eine Hitzebeständigkeit bei Temperaturen größer als 150°C, vorzugsweise PTFE, Silikon-Kautschuk, Äthylen-Propylen-Terpolymer (APTK), Viton, Butyl, Teflon, aufweist.

6. Elektromotorisch betriebene Küchenmaschine (1) nach einem der vorhergehenden Ansprüche, **dadurch gekennzeichnet, dass** das Dichtelement (9) eine Materialstärke von 0,5 mm bis 2 mm aufweist.

7. Elektromotorisch betriebene Küchenmaschine (1) nach einem der vorhergehenden Ansprüche, **dadurch gekennzeichnet, dass** der zu dem Dichtelement (9) korrespondierende Gehäuseteilbereich (10) des Basisgerätes (3) eine konvexe Lauffläche (11) für das Dichtelement (9) aufweist.

8. Elektromotorisch betriebene Küchenmaschine (1) nach einem der vorhergehenden Ansprüche, **dadurch gekennzeichnet, dass** ein radialer Abstand (a) zwischen der Kupplungseinrichtung (8) und dem korrespondierenden Gehäuseteilbereich (10) des Basisgerätes (3) in einer Kontaktebene (18) des Gehäuseteilbereiches (10) und des Dichtelementes (9) senkrecht zu einer Rotationsachse (x) der Kupplungseinrichtung (8) zwischen 2 mm und 10 mm beträgt, und/oder dass eine radiale Länge (b) des Dichtelementes (9) bezogen auf eine senkrechte Projektion des den Gehäuseteilbereich (10) kontaktierenden Dichtelementes (9) zwischen 4 mm und 12 mm beträgt.

9. Elektromotorisch betriebene Küchenmaschine (1) mit einem einen Elektromotor (2) aufweisenden Basisgerät (3) und einem in das Basisgerät (3) einsetzbaren Zubereitungsgefäß (4), wobei ein Gefäßboden (5) des Zubereitungsgefäßes (4) eine Bodenöffnung (6) aufweist, die mittels eines Rührwerks (7) fluiddicht verschließbar ist, welches Rührwerk (7) durch die Bodenöffnung (6) hindurch in eine mittels des Elektromotors (2) rotierbare Kupplungseinrichtung (8) eingreifbar ist, wobei ein der Kupplungseinrichtung (8) benachbarter unbeweglicher Gehäuseteilbereich (10) des Basisgerätes (3) ein flexibles Dichtelement (9), aufweist, **dadurch gekennzeichnet, dass** das Dichtelement (9) ein Schaumkörper ist, welcher auf der gegen die Kupplungseinrichtung (8) wirkenden Seite eine fluiddichte Oberflächenlage (12), nämlich eine Teflonlage, aufweist.

10. Elektromotorisch betriebene Küchenmaschine (1) nach Anspruch 9, **dadurch gekennzeichnet, dass** die Kupplungseinrichtung (8) auf der gegen das Dichtelement (9) wirkenden Seite eine konvexe Lauffläche für das Dichtelement (9), insbesondere einen in axiale Richtung weisenden Vorsprung, aufweist, und/oder, dass das Dichtelement (9) auf der gegen die Kupplungseinrichtung (8) wirkenden Seite eine konvexe Lauffläche für die Kupplungseinrichtung (8), insbesondere einen in axiale Richtung weisenden Vorsprung, aufweist.

## Claims

1. An electric motor-driven food processor (1) with a base device (3) that has an electric motor (2) and with a preparation vessel (4) that can be inserted into the base device (3), wherein a vessel bottom (5) of the preparation vessel (4) has a bottom opening (6) that can be closed in a fluid-tight manner by means of a stirring unit (7), and wherein said stirring unit (7) can be engaged into a coupling device (8), which can be rotated by means of the electric motor (2), through the bottom opening (6), wherein the coupling device (8) comprises a sealing element (9), which is connected to the coupling device (8) in a rotationally fixed manner, **characterized in that** the sealing element (9) is designed to be transferred as a function of a rotational speed of the coupling device (8) from a state which is grinding on the housing part region (10) to a non-grinding state, the sealing element (9) designed for acting against a corresponding immovable partial housing region (10) of the base device (3) in a fluid-tight manner, following gravity, at a rotational speed of the coupling device (8) below a defined rotational speed limit, as well as for releasing the functional connection due to a rotational speed-dependent centrifugal force effect at a rotational speed above the rotational speed limit.

2. The electric motor-driven food processor (1) according to claim 1, **characterized in that** the rotational speed limit lies between 50 rpm and 200rpm.

3. The electric motor-driven food processor (1) according to claim 1 or 2, **characterized in that** the sealing element (9) is a flexible sealing lip, which surrounds the coupling device (8) in the circumferential direction.

4. The electric motor-driven food processor (1) according to one of the preceding claims, **characterized in that** the sealing element (9) is glued and/or clamped on the coupling device (8).

5. The electric motor-driven food processor (1) according to one of the preceding claims, **characterized in that** the sealing element (9) comprises a material with a heat resistance to temperatures greater than 100 °C, particularly a heat resistance to temperatures greater than 150 °C, preferably PTFE, silicone rubber, ethylene-propylene terpolymer (APTK), viton, butyl or Teflon.

6. The electric motor-driven food processor (1) according to one of the preceding claims, **characterized in that** the sealing element (9) has a material thickness of 0.5 mm to 2 mm.

7. The electric motor-driven food processor (1) according to one of the preceding claims, **characterized in that** the partial housing region (10) of the base device (3), which corresponds to the sealing element (9), has a convex running surface (11) for the sealing element (9).

8. The electric motor-driven food processor (1) according to one of the preceding claims, **characterized in that** a radial clearance (a) between the coupling device (8) and the corresponding partial housing region (10) of the base device (3) in a contact plane (18) of the partial housing region (10) and the sealing element (9) perpendicular to a rotational axis (x) of the coupling device (8) lies between 2 mm and 10 mm and/or that a radial length (b) of the sealing element (9) referred to a vertical projection of the sealing element (9) contacting the partial housing region (10) lies between 4 mm and 12 mm.

9. An electric motor-driven food processor (1) with a base device (3) that has an electric motor (2) and with a preparation vessel (4) that can be inserted into the base device (3), wherein a vessel bottom (5) of the preparation vessel (4) has a bottom opening (6) that can be closed in a fluid-tight manner by means of a stirring unit (7), and wherein said stirring unit (7) can be engaged into a coupling device (8), which can be rotated by means of the electric motor (2), through the bottom opening (6), wherein an immovable partial housing region (10) of the base device (3) lying adjacent to the coupling device (8) comprises a flexible sealing element (9), **characterized in that** the sealing element (9) is a foam body, which is provided with a fluid-tight surface layer (12), namely a Teflon film, on the side acting against the coupling device (8).

10. The electric motor-driven food processor (1) according to claim 9, **characterized in that** that the coupling device (8) comprises a convex running surface for the sealing element (9), particularly a projection pointing in the axial direction, on the side acting against the sealing element (9) and/or that the sealing element (9) comprises a convex running surface for the coupling device (8), particularly a projection pointing in the axial direction, on the side acting against the coupling device (8).

## Revendications

1. Robot de cuisine (1) à moteur électrique avec un dispositif de base (3) comportant un moteur électrique (2) et un récipient de préparation (4) pouvant être inséré dans le dispositif de base (3), dans lequel un fond de récipient (5) du récipient de préparation (4) comporte une ouverture de fond (6) qui peut être fermée de manière étanche aux fluides au moyen d'un agitateur (7), lequel agitateur (7) peut être engagé à travers l'ouverture inférieure (6) dans un dispositif d'accouplement (8) pouvant être entrainé en rotation au moyen du moteur électrique (2), dans lequel le dispositif d'accouplement (8) présente un élément d'étanchéité (9) qui est lié de manière fixe en rotation au dispositif d'accouplement (8), **caractérisé en ce que** l'élément d'étanchéité (9) est conçu pour passer d'un état de frottement contre une zone partielle de boîtier (10) à un état de non-frottement en fonction d'une vitesse de rotation du dispositif d'accouplement (8), dans lequel l'élément d'étanchéité (9) agit de manière étanche aux fluides contre une zone partielle fixe correspondante (10) du boîtier du dispositif de base (3) sous l'effet de la gravité dans le cas d'une vitesse de rotation du dispositif d'accouplement (8) inférieure à une vitesse de rotation limite définie et libère la liaison active en raison d'une action de force centrifuge dépendante de la vitesse de rotation dans le cas d'une vitesse de rotation supérieure à la vitesse de rotation limite.

2. Robot de cuisine à moteur électrique (1) selon la revendication 1, **caractérisé en ce que** la vitesse de rotation limite est comprise entre 50 tr/min et 200 tr/min.

3. Robot de cuisine à moteur électrique (1) selon la revendication 1 ou 2, **caractérisé en ce que** l'élément d'étanchéité (9) est une lèvre d'étanchéité flexible entourant le dispositif d'accouplement (8) dans la direction circonférentielle.

4. Robot de cuisine à moteur électrique (1) selon l'une des revendications précédentes, **caractérisé en ce que** l'élément d'étanchéité (9) est collé et/ou serré sur le dispositif d'accouplement (8).

5. Robot de cuisine (1) à moteur électrique selon l'une des revendications précédentes, **caractérisé en ce que** l'élément d'étanchéité (9) comporte un matériau présentant une résistance à la chaleur à des températures supérieures à 100°C, en particulier une résistance à la chaleur à des températures supérieures à 150°C, de préférence du PTFE, du caoutchouc au silicone, du terpolymère éthylène-propylène (APTK), du Viton, du butyle, du Téflon.

6. Robot de cuisine à moteur électrique (1) selon l'une des revendications précédentes, **caractérisé en ce que** l'élément d'étanchéité (9) a une épaisseur de matériau de 0,5 mm à 2 mm.

7. Robot de cuisine (1) à moteur électrique selon l'une des revendications précédentes, **caractérisé en ce que** la zone partielle de boîtier (10) du dispositif de base (3) correspondant à l'élément d'étanchéité (9) présente une surface de circulation convexe (11) pour l'élément d'étanchéité (9).

8. Robot de cuisine (1) à moteur électrique selon l'une des revendications précédentes, **caractérisé en ce qu'**une distance radiale (a) entre le dispositif d'accouplement (8) et la zone partielle de boîtier (10) correspondante du dispositif de base (3) dans un plan de contact (18) de la zone partielle de boîtier (10) et de l'élément d'étanchéité (9) perpendiculaire à un axe de rotation (x) du dispositif d'accouplement (8) est comprise entre 2 mm et 10 mm, et/ou **en ce qu'**une longueur radiale (b) de l'élément d'étanchéité (9) par rapport à une projection verticale de l'élément d'étanchéité (9) en contact avec la zone partielle de boîtier (10) est comprise entre 4 mm et 12 mm.

9. Robot de cuisine (1) à moteur électrique avec un dispositif de base (3) comportant un moteur électrique (2) et un récipient de préparation (4) pouvant être inséré dans le dispositif de base (3), dans lequel un fond de récipient (5) du récipient de préparation (4) présente une ouverture de fond (6) pouvant être fermée de manière étanche aux fluides au moyen d'un agitateur (7), lequel agitateur (7) peut s'engager à travers l'ouverture de fond (6) dans un dispositif d'accouplement (8) pouvant être entrainé en rotation au moyen du moteur électrique (2), dans lequel une zone partielle fixe de boîtier (10) du dispositif de base (3) qui est adjacente au dispositif d'accouplement (8), présente un élément d'étanchéité (9) flexible, **caractérisé en ce que** l'élément d'étanchéité (9) est un corps en mousse qui présente sur le côté agissant contre le dispositif d'accouplement (8) une couche superficielle (12) étanche aux fluides, à savoir une couche de téflon.

10. Robot de cuisine (1) à moteur électrique selon la revendication 9, **caractérisé en ce que** le dispositif d'accouplement (8) présente sur le côté agissant contre l'élément d'étanchéité (9) une surface de circulation convexe pour l'élément d'étanchéité (9), en particulier une saillie orientée dans la direction axiale, et/ou **en ce que** l'élément d'étanchéité (9) présente sur le côté agissant contre le dispositif d'accouplement (8) une surface de circulation convexe pour le dispositif d'accouplement (8), en particulier une saillie orientée dans la direction axiale.
